# EUROPEAN PATENT SPECIFICATION

(11) **EP 2 381 800 B1**
(45) Date of publication and mention of the grant of the patent: **11.03.2015**
(21) Application number: 10700047.3
(22) Date of filing: 05.01.2010
(51) Int. Cl.: A23L 1/39, A23L 1/304, A23L 1/40

(54) **SAVOURY FOOD CONCENTRATE COMPRISING A SOURCE OF IRON IONS**
WOHLSCHMECKENDES NAHRUNGSMITTELKONZENTRAT ENTHALTEND EINE EISENIONENQUELLE
CONCENTRÉ ALIMENTAIRE GOÛTEUX COMPRENANT UNE SOURCE D'IONES DE FER

(30) Priority: 27.01.2009 EP 09151435
(43) Date of publication of application: 02.11.2011
(73) Proprietor: Unilever N.V., 3013 AL Rotterdam (NL); Unilever PLC, A Company Registered in England and Wales under Company no. 41424, London EC4Y 0DY Greater London (GB)
(72) Inventor: KELLERMANN, Richard, F., 74074 Heilbronn (DE); SEEWI, Gila, 74074 Heilbronn (DE)
(74) Representative: Reijns, Tiemen Geert Pieter
(86) International application number: PCT/EP2010/050027
(87) International publication number: WO 2010/086192

(56) References cited:
- JP-A- 2007 215 480
- LYNCH SR, COOK JD: "Interaction of vitamin C and iron" ANNALS OF THE NEW YORK ACADEMY OF SCIENCES, 1980, pages 32-44, XP002532659
- LYNCH SR, STOLTZFUS, RJ: "Iron and ascorbic acid: proposed fortification levels and recommended iron compounds" JOURNAL OF NUTRITION, 2003, pages 2978S-2984S, XP002532660
- SALOVAARA S, SANDBERG A, ANDLID T: "Organic acids influence iron uptake in the human epithelial cell line Caco-2" JOURNAL OF AGRICULTURAL AND FOOD CHEMISTRY, vol. 50, 2002, pages 6233-6238, XP002532661
- Sax, N I and Lewis, R J: "Hawley's condensed chemical dictionary", 1987, Van Nostrand Reinhold Company, New York ISBN: 0-442-28097-1 page 514,

## Description

The present invention relates to a dry savoury food concentrate and to a ready to eat food product comprising at least part of the dry savoury food concentrate. It further relates to a process to prepare the same dry savoury food concentrate and a process to prepare the ready to eat food product. It further relates to a process to reduce formation of off-color on the surface of a cooking container upon dissolution of an iron fortified dry savoury food concentrate in an aqueous liquid. It further relates to a process to reduce the formation of precipitate during preparation of an iron-fortified ready to eat food product.

### Background of the invention

Especially in developing areas, iron is an element which may be not abundantly present in the regular diet. This may be due to the fact that meat and/or dairy products, which are considered important sources of iron for the diet, are consumed in a less amount compared to wealthier parts of the world. However, also in wealthier countries, people may voluntary choose for a diet with a relatively low iron content, such as a vegetarian diet. The risk for a deficiency in iron may therefore be present for a significant part of the population. To provide an alternative source for iron, next to e.g. meat products, iron may be added as a supplement to food products, generally referred to as "iron-fortification".

Dry savoury food concentrates, such as e.g. bouillon cubes, are popular products to enrich a meal or to prepare a dish as such, by e.g. dissolving one or more dry savoury food concentrates, at least partly, in a dish or in hot water, resulting in a ready-to-eat food product. The use of a dry savoury food concentrate for these reasons may be more common in developing areas than in Western countries, as dry savoury food concentrates are relatively cheap ingredients, compared to freshly prepared bouillons or soups or compared to herbs and spices. Because dry savoury food concentrates may be widely consumed in areas with a population with an increased risk for iron-deficiency, the use of these concentrates as an alternative source for iron may be a preferred choice.

Fortification of a dry savoury food concentrate, however, entails several challenges to meet.

A problem observed by the inventors in the manufacturing of iron-fortified dry savoury food concentrates, was that upon dilution of the food concentrate in hot or boiling water in a cooking container, the cooking container showed an off-color. The off-color can be described as a brow-gold-like staining on the surface of the cooking container that was in contact with the ready to eat food product to be prepared, and wherein the food concentrate was dissolved. Off-color appeared on both metallic and non-metallic surfaces. The off-color was difficult to remove, and could for example still be present when the cooking container was cleaned in a conventional dish washer running a standard program.
In addition to the problem of off-coloring, a serious problem of the appearance of off color is that at least part of the iron intended for fortification is lost by forming the off-color staining on the cooking container. This makes dosing of the iron compound for fortification in the resulting ready to eat food product unpredictable. It is that the formation of such an off-color in the cooking container and unpredictable iron content in the ready to eat food product is not desired from a consumer perspective.

Iron fortification easily results in a higher price of the dry savoury food concentrate. Especially in the consumer population where iron-fortification is desired, the price of the dry savoury food concentrate should preferably not be much higher than a dry savoury food concentrate without fortification with iron. Hence, the iron-fortificant should be as cheap as possible. The relatively cheap iron fortificants, like e.g. iron sulphate, or iron fumarate, however, show stronger off-color effects in the ready-to-eat food product resulting from the dry savoury food concentrate.

WO 2006/063690 describes a process for making bouillon cubes or seasoning cubes free of trans unsaturated fatty acids. The process comprises mixing powdered fat with the particulate ingredients by pressing. The application discloses a bouillon cube comprising salt, monosodium glutamate and corn starch.

Lynch SR and Cook JD, "Interaction of vitamin C and iron", Annals of the New York Academy of Sciences, 1980, p. 12-44, discloses that ascorbic acid is a powerful enhancer of nonheme iron absorption and can reverse the inhibiting effect of substances such as tea and calcium/phosphate. It facilitates iron absorption by forming a chelate with ferric iron at acid pH levels that remains soluble at the alkaline pH of the duodenum. It is possible to fortify common salt with 0.1% iron as ferric phosphate (FePO4) and 1.25% ascorbic acid. This product can be stored under all but the most extreme tropical conditions provided that 2.5% starch is incorporated to retard the development of discolouration.

JP2007215480 discloses a composition for iron enriched foods comprising a water - insoluble iron salt and a chelating agent. Preferably, the chelating agent is a citrate. Hence, secondary aggregation of the particles is suppressed and dispersion thereof is improved. Preferred iron sources are ferric phosphate, ferrous phosphate, pyrophosphoric - acid ferric, a pyrophosphoric - acid ferrous, ferric hydroxide, a ferric oxide.

Lynch SR, Stolzzfus R.J., "Iron and acsorbic acid: proposed fortification levels and recommended iron compounds", Journal of Nutrition, 2003, p. 29785-29845 discloses a study which reports that ascorbic, lactic, malic, tartaric and citric acid modestly improve iron bio-availability. When employing ascorbic acid, the molar ratio of ascorbic acid to iron should be between 4:1 and 2:1. The preferred iron source is dried ferrous sulfate of small particle size.

Palovaara S. et al., "Organic acids influence iron uptake in the human epithelial cell line CaCo-2", Journal of Agricultural and food chemistry, Vol.50, 2002, p. 6233-6238 discloses that organic acids influence iron uptake in the human epithelial cell line Caco-2. The observed effects were dose-dependent. Tartaric and malic acid enhanced Fe2+ and Fe3+ uptake. Citric acid improved Fe3+ uptake. Organic acids can form soluble complexes with iron ions. Formation of soluble acid-Fe complexes has been proposed as a crucial mechanism rendering iron accessible for uptake.

Hence, there is a need in the art to provide a dry savoury food concentrate which is fortified with an iron compound and which upon dissolution in hot water does not show off-color effects on the inner surface of the cooking container, or at least reduced off-color compared to conventional dry savoury food concentrates fortified with the same iron compound without further measures to reduce off-color on the inner surface of the cooking container.

### Summary of the invention

Surprisingly, the abovementioned problem was solved by a dry savoury food concentrate comprising:
a) from 30 %wt. to 70 %wt. of NaCl;
b) from 0.05 %wt. to 2 %wt of an iron ion selected from the group consisting of Fe²⁺ and Fe³⁺ and mixtures thereof, which iron ion is derived from an added iron compound which is dissolvable in an aqueous solution,
c) from 0.35%wt. to 7.0%wt of an acid compound selected from the group consisting of citric acid, ascorbic acid, malic acid, tartaric acid, lactic acid and mixtures thereof,
all weight% based on the weight of the total dry savoury food concentrate,
and wherein the ratio of acid ions to iron ions on molecular level is between 1:1 and 10:1,
and wherein the concentrate is a concentrate selected from the group of concentrates consisting of a bouillon concentrate, a soup concentrate, a sauce concentrate and a gravy concentrate.

### Detailed description of the invention

All percentages are weight/weight percentages of the total composition unless otherwise indicated. Where the term "comprising" is used in the specification or claims, it is not intended to exclude any terms, steps or features not specifically recited.

The dry savoury food concentrate of the present invention is a savoury food concentrate. This means that the taste of the ready-to-eat food product resulting from dissolving the dry savoury food concentrate does not taste sweet. Sugar may be present however in the ready to eat food concentrate. The sugar content of the dry savoury food concentrate is preferably in the range of from 0%wt.to 20%wt., preferably of from 1%wt. to -15%, more preferably of from 5%wt. to 12%wt., most preferably of from 7%wt. to 10%wt.
The savoury character of the dry savoury food concentrate is also expressed in the salt content. When the concentrate is diluted to an aqueous solution, which is ready to be consumed, e.g. by dilution in water, the dissolved NaCl content is in the range of from 0.5%wt. to 1,7%wt, preferably of from 0.7%wt. to 1.3%wt., based on the total weight of the resulting aqueous solution. To this end, the dry savoury food concentrate of the present invention comprises an amount of NaCl of from 30%wt. to 70%wt, preferably of from 40%wt. to 60%wt, more preferably of from 45%wt. to 55%wt.
In the diluted product, the amount of Na⁺ ions is preferably in the range of from 0.2%wt to 0.7%wt.

In addition to NaCl, the presence of monosodium glutamate may contribute to the savoury character of the dry savoury food concentrate of the present invention. Monosodium glutamate is preferably present in an amount of from 0%wt. to 45%wt., preferably in an amount of from 10%wt. to 35%wt., more preferably of from 15%wt. to 30%wt.

The dry savoury food concentrate of the present invention further preferably comprises starch. Starch may be corn starch, tapioca starch, pea starch or potato starch. Within the context of the present invention, maltodextrin is considered as starch as well. Mixtures of the different types of starch are possible as well. The amount of starch preferably is from 2%wt. to 15%wt., more preferably from 5%wt. to 12%wt., most preferably from 7%wt. to 10%wt. Starch is used as a filler material and may contribute to a desired specific mouthfeel during consumption of the disolved dry savoury food concentrate of the invention.

The dry savoury food concentrate may further comprise fat. Fat functions as a binder material in the dry savoury food concentrate. It contributes to the integrity of the concentrate, for example when this concentrate has the shape of a cube or a tablet, or a granule. It provides a specific taste to the ready-to-eat food product resulting from the dry savoury food concentrate after dissolving. The fat may be animal fat, such as e.g. chicken fat, beef or pork fat or vegetable fat or oil, like e.g. olive oil, rape seed oil, or palm oil. Hence, the present invention preferably relates to a dry savoury food concentrate further comprising fat in an amount of from 1%wt. to 30%wt., preferably of from 5%wt.to 25%wt., more preferably of from 10%wt. to 20%wt.
The amount of fat depends on the format of the dry savoury food concentrate. For example, when the format is a hard, preferably pressed cube or tablet, the preferred fat content is preferably from 1 %wt.to 15%wt., preferably from 5%wt. to 12%wt., more preferably from 7%wt. to 10%wt. When the format is an extruded, preferably soft cube, the fat content may preferably be from 15%wt.to 30%, preferably from 17%wt.to 25%wt.. For reasons of health, it may be preferred that at least part of the fat content is vegetable oil. Preferably the amount of vegetable oil is from 1%wt. to 15%, preferably from 5%wt. to 12%wt., more preferably from 7%wt. to 10%wt, based on the weight of the dry savoury food concentrate. At least part of the fat may be hydrogenated fat, which results in a more solid structure of the dry savoury food concentrate.

The invention preferably relates to a dry savoury food concentrate, wherein the dry savoury food concentrate further comprises protein. This may be for reasons of taste. The protein may comprise animal protein, such as e.g. chicken, beef, game, pork or fish protein. It may also comprise vegetable protein. The protein preferably comprises hydrolysed protein, as this gives a stronger taste impact compared to non-hydrolysed protein. Acid-hydrolysed protein is preferred for reasons of standardising the size of the hydrolysation fragments and better solubility of the relatively short hydrolysation fragments, as compared to other types of hydrolysation. The protein is preferably present in an amount of from 5%wt. to 30%wt., preferably of from 10%wt.to 25%wt., more preferably of from 12%wt. to 20%wt.

Preferably, the present invention relates to a dry savoury food concentrate wherein the dry savoury food concentrate further comprise particles of vegetables or herbs. These particles are preferably dehydrated. The preferred content is from 0%wt. to 10% wt., preferably from 1%wt. to 7%wt., more preferably from 3%wt.to 5%. The vegetable particles may comprise e.g. one or more from the group of carrot, leek, onion, celery roots, celeriac, bell pepper, tomatoes and mushrooms. Herb or spice particles are preferably one or more from the group of parsley, garlic, lovage leaves, basil, thyme, rosemary, oregano, black pepper and red berries. The dry savoury food concentrate may preferably comprise spices, like pepper, celery seeds, turmeric, nutmeg, and fenugreek. Spices may be present in an amount of from 0.1%wt. to 3 %wt.

After dissolving the dry savoury food concentrate in an aqueous liquid such as e.g. boiling water, the pH of the resulting ready-to-eat food product should not be too low, as a too low pH results in an unpleasant acid taste which may be not appreciated by consumers. A too high pH may result in an alkalic, soapy taste, which is also not desired. The pH of the ready-to-eat food product resulting after dissolving of the savoury food product of the present invention is preferably comparable, more preferably similar, to the pH of a conventional ready-to-eat food product, such as e.g. a bouillon, which has not been fortified. Therefore, the present invention preferably relates to a dry savoury food concentrate wherein the dry savoury food concentrate upon dissolving in hot or boiling water results in a ready-to-eat food product with a pH in the range of from 5.2 to 8, preferably of from 5.5 to 8, preferably of from 5.8 to 7.7, more preferably of from 6 to 7.5, most preferably of from 6.5 to 7.

The amount of water wherein the dry savoury food concentrate should be dissolved is easily to be determined by a person skilled in the art. This can be done e.g. by dissolving the dry savoury food concentrate in an amount of water until a dissolved NaCl content has been reached in the range of from 0.5%wt. to 1.7 wt%, preferably in the range of from 0.7%wt.to 1.3 wt%, based on the weight of the resulting aqueous solution. The amount of Na⁺ will preferably be in the range of from 0.2%wt. to 0.7%wt, preferably of from 0.3%wt to 0.5%wt.

The dry savoury food concentrate according to the invention is a dry product. It is not a liquid product. Therefore, preferably the present invention relates to a dry savoury food concentrate wherein the water activity is between 0.1 and 0.6, preferably, between 0.15 and 0.4, more preferable between 0.2 and 0.3.

The water content of the dry savoury food concentrate is preferably in the range of from 1%wt. to 8wt%, preferably from 2%wt. to 3 wt%. The water content contributes to a stable product shape which can be packaged e.g. in a wrapper of e.g. paper, foil or metal or a combination of these materials, or can be packaged in a packaging bag or dispenser, without being damaged easily during production and/or transportation. Hence, preferably, the invention relates to a dry savoury food concentrate wherein the dry savoury food concentrate is packaged. Preferably, the dry savoury food concentrate is packaged in at least one of the packagings of the group of
- a wrapper, preferably comprising at least one of the materials of the group of paper, metal and plastic,
- a packaging bag,
- a dispenser apparatus.
Preferably the dry savoury food concentrate is packaged in a wrapper. Packaging in a packaging back or a wrapper facilitates accurate dosing of the dry savoury food concentrate with regard to the desired fortification effect.

The format of the dry savoury food concentrate of the present invention is preferably a cube or a tablet or a granulated shape. The advantage of a granulated shape is that the dry savoury food concentrate can be dosed in a more flexible way. A cube or a tablet shape is particularly preferred. Cube or tablet formats have the advantage of unit dosing when preparing a dish or when dissolving in a standard amount of liquid, e.g. boiling water. For the purpose of the present invention, fortification of a dry savoury food concentrate, unit dosing may guarantee a specific, predictable iron-intake. This may be for example the daily recommended dose, or a specifically desired part of it, according to the wish of the consumer or manufacturer. Besides a strict cube and tablet shape, "cube or tablet" comprises shapes like a pillow, cylinder, ball, pyramid, as long as the shape can be used as a unit dosing format. The weight of the dry savoury food concentrate, preferably when in cube or tablet shape, is preferably from 3g to 30g, preferably from 4g to 20g, more preferably from 6g to 11 g. Especially when the cube or tablet has the shape of a real cube in the meaning of a body bounded by six identical squares and having eight vertices, the weight of the dry savoury food concentrate is preferably from 3g to 5g, more preferably from 3.5g to 4.5g, most preferably from 3.8g to 4.2g. Especially when the cube or tablet has the shape of a real tablet in the meaning that it has the shape of a rectangular parallelepiped, the weight of the dry savoury food concentrate is preferably from 6g to 20g, more preferably from 8g to 12g, most preferably from 9g to 11 g.

According to the present invention, the dry savoury food concentrate comprises from 0.05%wt to 2%wt of an iron ion. "Iron ion" should be understood as both the ion in non-bound form, such as when dissolved in water, and the ion in the bound form, such as when present in a non-dissolved salt. Preferably, the present invention relates to a dry savoury food concentrate, wherein the source of the iron ion comprises an iron compound selected from the group consisting of ferrous gluconate, ferrous sulphate, ferrous fumarate, ferric-Na-EDTA, ferric ammonium citrate and mixtures thereof.

The present invention is preferably useful when iron compounds are used that result in a relatively strong off-colouring on the inner surface of the cooking container. The off-colouring is more serious when ferrous sulphate, ferrous fumarate and/or ferrous gluconate are used. Therefore, preferably, the present invention relates to a dry savoury food concentrate, wherein the source of the iron ion comprises an iron compound selected from the group consisting of ferrous-sulphate, ferous-fumarate, ferrous-gluconate, and mixtures thereof.

Products comprising an iron compound or iron ion which has an encapsulated structure or are in the form of a complex, e.g. a complex with an amino acid or with EDTA are less preferred because they are relatively expensive. Hence the non-complexed and non-encapsulated iron compounds are preferred. However, a specific content of iron compounds of the group of complexed or encapsulated iron compounds, like Na-Fe-EDTA, may be preferred besides the presence of not-complexed or not-encapsulated iron compounds, for example to reduce metallic off-taste in the resulting ready-to-eat food product after dissolution. The amount may preferably be from 1%wt. to 50%wt, preferably from 5%wt. to 30%wt, more preferably from 10%wt. to 20%wt, based on the total weight of iron compound.

Optimal off-color reduction effects were observed for the compounds ferrous sulphate, ferrous fumarate and ferrous gluconate. Preferably, therefore, the present invention relates to a dry savoury food concentrate of the present invention, wherein the source of from 10%wt. to 100%wt, preferably from 30%wt.to 80 %wt, more preferably from 50%wt. to 70%wt of the iron ion in the dry savoury food concentrate comprises an iron compound selected from the group consisting of ferrous sulphate, ferrous fumarate, ferrous gluconate and mixtures thereof.

The added iron compound is dissolvable in an aqueous solution. Iron compounds that are not or hardly dissolvable in an aqueous solution, such as e.g. ferric pyrophosphate or reduced iron may sediment in the ready-to-eat food product after dissolution, and are therefore not encompassed by the claimed invention, the concentrate comprises an iron compound, preferably an iron salt, which is dissolvable in an aqueous solution. Preferably, the dissolvability in water at ambient temperature is higher than 0.5 g/l, preferably higher than 1 g/l. Preferred iron compounds are the iron salts Fe-II Sulphate (dissolvability in water higher than 250g/I water, mol. weight 151,9 g), Fe-II Gluconate (dissolvability higher than 200g/I water, mol. weight 446,1 g) or Fe-II fumarate (dissolvability higher than 1 g/l water, mol. weight 169,9 g). Iron salts which are hardly or not dissolvable in water are not encompassed by the claimed invention. Examples of hardly or not-dissolvable iron salts are for example: Fe III phosphate (dissolvability in water lower than 0,002 microgram /I water, mol. weight 150,8 g) and metallic iron powder (not soluble in water, mol weight 56 g). not encompassed by the claimed invention

The amount of iron compound used in the present invention depends on the iron compound or compounds that are chosen. The iron compound is preferably present in such an amount that the dry savoury food concentrate comprises an iron ion selected from the group consisting of Fe²⁺ and Fe³⁺ and mixtures thereof, of from 0.05%wt. to 2%wt, preferably of from 0.1 %wt to 1.6 %wt, more preferably, of from 0.2%wt to 1 %wt, based on the weight of the bouillon cube.

Preferably the invention relates to a dry savoury food concentrate, wherein the at least one food grade iron compound is present in an amount of from 0.35%wt. to 7.0%wt, based on the weight of the dry savoury food concentrate. When a higher amount of iron compound is chosen, the amount may not be desired in terms of the recommended dosing. Moreover, the taste and/or colour of the resulting ready-to-eat food product may be too much affected and may be more difficult to compensate for without any side effects in e.g. taste. A lower amount of iron is not desired, as a minimum amount of fortification is desired to get an effective fortification effect.

Several acid compounds may be used to reduce the appearance of off-colour upon dissolving the dry savoury food concentrate in hot, preferably boiling water. Not all acids appeared to be effective against the off-colour effect. For example, a decrease in pH by addition of HCl did not solve the problem. Surprisingly, it was found that the acid compounds that showed an effect were ascorbic acid, malic acid, tartaric acid, citric acid and citrate-salt. Preferred acid compounds are malic acid, citric acid and citrate-salt, because the metallic off taste is less in the resulting ready-to-eat food product. Optimal results were reached with citric acid and citrate salt, preferably citric acid, which are therefore the most preferred. Hence, preferably the invention relates to a dry savoury food concentrate wherein the acid compound comprises citric acid.

The term "acid compound" is intended to comprise also food-grade, water-soluble salts of citric acid, ascorbic acid, malic acid, tartaric acid, and lactic acid. Preferably the salt is a salt with an alkaline metal ion, like preferably Na⁺. Hence, mixtures of several "pure" acids, or of one or more "pure" acids with one or more salts of one or more "pure" acids and mixtures of only salts of the "pure" acids are possible as well.

The acid compound is present in an amount of from 0.35%wt. to 7 wt%. The preferred concentration of the acid compound is from 0.3-5.5 wt%, preferably from 0.5%wt. to 3 wt%, more preferably from 0.7%wt. to 2 wt%, based on the weight of the dry savoury food concentrate. For the acid compounds malic acid, tartaric acid, citric acid, citrate-salt, the preferred range is from 0.4%wt. to 1.25%wt, preferably, from 0.6%wt. to 1 %wt., more preferably from 0.7%wt. to 0.9%wt., based on the weight of the dry savoury food concentrate. Ascorbic acid showed especially good results at a 3 to 4 times higher concentration compared with the amounts of the other acid compounds. It is relevant that the amount of acid does not become too high. Higher concentrations of acid compound may result in a pH of the ready-to-eat food product resulting after dissolving in an aqueous liquid of below 5.2. This is not preferred, as an acid taste is not desired in the ready-to-eat food products resulting from the dry savoury food concentrate of the invention. Optimally, the acid compound is present in such an amount that the pH of the ready-to-eat food product resulting upon dissolution remains within the range of pH of from 5.2 to 8, measured at room temperature.

The amount of acid compound may vary. Preferably, the ratio of acid ions to iron ions on molecular level is preferable between 1:1 and 10:1, preferably between 1.2:1 and 6:1, most preferably between 1.5:1 and 4:1. A lower ratio might result in ineffective reduction of off-colour in the cooking container upon dissolving in hot/boiling aqueous liquid, whereas a higher ratio may result in too acid tasting food products resulting from the dry savoury food concentrate or a too low fortification effect.

The dry savoury food concentrate preferably comprises a concentrate for one of the group of a bouillon, a soup, a sauce and a gravy. Hence, the dry savoury food concentrate preferably is a concentrate selected from the group of concentrates consisting of a bouillon concentrate, a soup concentrate, a sauce concentrate and a gravy concentrate. Preferably it is a concentrate for a bouillon.

In a further aspect, the present invention relates to a process to prepare a dry savoury food concentrate selected from the group of concentrates consisting of a bouillon concentrate, a soup concentrate, a sauce concentrate and a gravy concentrate, comprising the steps of:
a) preparing a mixture comprising:
   - from 30%wt. to 70 %wt. of NaCl;
   - from 0.05 %wt. to 2 %wt of an iron ion selected from the group consisting of Fe²⁺ and Fe³⁺ and mixtures thereof, which iron ion is derived from an added iron compound which is dissolvable in an aqueous solution,
   - from 0.35%wt. to 7.0%wt of an acid compound selected from the group consisting of citric acid, ascorbic acid, malic acid, tartaric acid, lactic acid and mixtures thereof,
   all weight% based on the weight of the total dry savoury food concentrate;
b) shaping the resulting mixture to individual dry savoury food concentrates;
c) optionally packaging the shaped dry savoury food concentrates.

Shaping is preferably done in a conventional shaping apparatus. Such an apparatus may be a pressing apparatus to prepare hard cubes from e.g. Bonals^{™} or Fette^{™}. The pressure used during pressing is preferably between 50 and 500 N. When soft cubes are desired, an apparatus of e.g. Corazza^{™} may be preferred. When granules are the desired format, shaping may be performed with a conventional granulation machine such as an apparatus from Bepex^{™}.

In a further aspect, the present invention relates to a process to prepare a ready-to-eat food product by using at least one dry savoury food concentrate according to the present invention, comprising the step of:
a) combining the at least one dry savoury food concentrate, at least partly, with an aqueous liquid or a food product,
wherein the aquous liquid or the food product is contained in a cooking container.

Preferably, the process comprises the additional step of
b) simmering the combination resulting from step a).

The ready-to-eat food product is a food product that does not need to be dissolved or diluted anymore to be consumed. The aqueous liquid may be hot water, preferably boiling water. It may also be a liquid food product such as a soup or a sauce. The food product may be a sauce, a soup, or a dish, like a meal. Preferably, the food product is liquid, such as a soup or a sauce or a bouillon. The dry savoury food concentrate may be combined with a dish, and e.g. function as a seasoning. To this end, granules of the dry savoury food concentrate may be added to a food product, such as a dish, or a dry savoury food concentrate which may have the e.g. the shape of a cube, may be comminuted, e.g. crumbled between fingers, and may at least partly be added to the dish that needs to be seasoned.

Cooking container is intended to mean any container that can be used to prepare a ready-to eat food product of the invention. More specifically, it may be a cooking pan, cooking pot, a mug, a glass, a kettle, a bowl, a tray such as e.g. used for ready-to-eat meals or a plate.

The material of the cooking container is preferably one of the group of glass, ceramics, and metal, such as e.g. steel, stainless steel, copper, aluminium. Preferably the material of the cooking container is metal, as the effect of reduction of off-colouring which was difficult to remove from the cooking container was most effective.

It was observed that the off-colouring intensified with the duration of cooking. Therefore, the reduction of the off-color effect was most effective when the simmering time was between 1 minute and 30 minutes, preferably between 10 minutes and 20 minutes.

In a further aspect, the present invention relates to a ready-to-eat food product comprising at least part of a dry savoury food concentrate of the invention in an at least partly dissolved or comminuted status, as claimed.

The ready-to-eat food product may result from the dry ready-to eat savoury concentrate according to the invention. Preferably the total amount of iron ion selected from the group of Fe²⁺ and Fe³⁺ and mixtures thereof in the ready to eat food product of the invention amounts from at least 5x10⁻⁴ %wt., preferably from at least 2x10⁻³ %wt. and less than 5x10⁻² %wt., preferably less than 2x10⁻² %wt. based on the weight of the ready-to-eat food product. This amount refers to the amount of iron, i.e. Fe²⁺ and/or Fe³⁺ taken together. The amount of the actual iron compound may differ from this amount.

The amount of acid compound is preferably from at least 0.35x10⁻²wt% and less than 7x10⁻², preferably from at least 0.3x10⁻²wt% and less than 5.5x10⁻²wt%, more preferably from at least 0.5x10⁻²wt% and less than 3x10⁻²wt%, most preferably from at least 0.7x10⁻²wt% and less than 2x10⁻²wt%.

The pH of the ready-to-eat food product is preferably in the range of between 5.2 and 8, preferably between 5.5 and 7, most preferably between 5.7 and 6.8, more preferably between 5.9 and 6.5. Optimally the acid compound is present in such an amount to result in this pH.

The dissolved NaCl content of the ready-to-eat food product is preferably between 0.5%wt. and 1.7 wt%, preferably between 0.7%wt. and 1.3wt% based on the weight of the ready-to-eat food product. Preferably, the amount of Na⁺ in the ready to eat food product is between 0.2%wt. and 0.7%wt, preferably between 0.3%wt and 0.5%wt. based on the weight of the ready-to-eat food product.

The ready to eat food product preferably comprises one of the group of a bouillon, a soup, a sauce and a gravy.

It will be understood by the person skilled in the art that when the dry savoury food concentrate of the invention is dissolved or used to prepare a ready-to-eat food product, that the concentrate is not a concentrate anymore and that is not dry anymore.

It was observed that upon dissolution of a conventional iron fortified dry savoury food concentrate in an aqueous liquid as defined above, the cooking container, such as a pan or a aluminium tray, showed an unappealing off-colour on the inner surface which was in contact with the ready to eat food product. This off-colour was difficult to remove from the cooking container. Surprisingly, by the dry savoury food concentrate of the present invention, such an unappealing off-colour was not observed or the formation of off-colour was at least strongly reduced. Therefore, in a further aspect, the present invention relates to process to reduce formation of off-colour on the inner surface of a cooking container during preparation of an iron-fortified ready to eat food product, comprising the step of dissolving an iron-fortified dry savoury food concentrate in an aqueous liquid present in the cooking container, characterised in that the iron-fortified dry savoury food concentrate comprises an acid compound selected from the group consisting of: citric acid, ascorbic acid, malic acid, tartaric acid, lactic acid and mixtures thereof.

It was additionally found that the addition of the acid compound to the dry savoury food concentrate according to the present invention overcame the problem of formation of flocculation-like precipitate of bouillon compounds. Using the acid compounds of the present invention in combination with the fortifying iron compounds as described for this invention, it was observed that precipitate, e.g. in the form of flocculation, was absent or at least strongly reduced. The flocculation precipitate is not a mere precipitation of iron compound in the form of iron crystals or iron particles, for example resulting from a hard-dissolvable iron salt, that sink to the bottom of the cooking pot. Upon heating of the solution containing the food concentrate, flocculation appears through the resulting ready to eat food product such as a bouillon or a soup. Therefore, in a further aspect the present invention relates to a process to reduce the formation of precipitate during preparation of an iron-fortified ready to eat food product, comprising the step of dissolving an iron-fortified dry savoury food concentrate in an aqueous liquid, characterised in that the iron fortified dry savoury food concentrate comprises an acid compound selected from the group consisting of: citric acid, ascorbic acid, malic acid, tartaric acid, lactic acid and mixtures thereof.

The invention will be exemplified by the following non-limiting examples.

### Examples

### Comparative example:

A bouillon mixture was prepared in a stainless steel pan comprising the ingredients:

| | |
|---|---|
| Iodised salt: | 60%wt. |
| Monosodium glutamate | 15%wt. |
| Fractionated palm oil | 10%wt. |
| Potato starch | 15%wt. |
| Iron II sulphate: | 0.6% |

| **Iron salt:** | **result after dissolving in boiling water:** |
|---|---|
| Iron-II sulphate | gold-brown staining on the surface of the pan flocculation |
| Iron-II sulphate encapsulated | gold-brown staining on the surface of the pan flocculation |
| Iron-II fumarate | gold-brown staining on the surface of the pan flocculation |
| Iron II gluconate | gold-brown staining on the surface of the pan flocculation |

### Example 1

In a steel pan, a bouillon mixture was prepared comprising the ingredients:

| | |
|---|---|
| Salt (NaCl) | 54%wt |
| MSG | 17% |
| Hydrolysed vegetable protein | 16%wt |
| Sugar | 6.2%wt |
| Iron compound (FeSO4) | 0.67 wt% |
| Acid | |
| Potato starch | 5.2%wt. |

The ingredients are mixed for 2 minutes and 1.6% fractionated palm oil was added, followed by 3 minutes mixing. The mixture may be pressed to a cube.

To 8 grams of the mixture 0, 30, 60, 80 or 100 milligrams of citric acid was added and the mixture was dissolved in 500ml hot water and simmered for 2 minutes. The appearance of the surface of the pan was observed after simmering. Also the flocculation was monitored in the resulting ready to eat food product.

### Results:

| Citric acid | pH | Appearance |
|---|---|---|
| 0 mg, 0%wt | 7.55 | Gold-brown staining |
| | | Brown flocculants |
| 30 mg, 0.38%wt | 6.7 | No staining |
| | | Slight fine flocculants |
| 60 mg, 0.75%wt | 6.35 | No staining |
| | | No flocculation |
| 80 mg, 1%wt. | 5.8 | No staining |
| | | No flocculation |
| 100 mg, 1.25%wt | 5.5 | No staining |
| | | No flocculation |

When the experiments were conducted in a cooking container of aluminium, glass or ceramic material, comparable off colour was observed on the surface of the cooking container.

### Example 2

8 grams of the bouillon mixture used in Example 1 was mixed with 100 mg of malic acid, tartaric acid, citric acid, lactic acid 80% and ascorbic acid.

| Acid | pH | Appearance |
|---|---|---|
| Malic acid | 5.6 | No staining |
| | | No flocculation |
| Tartaric acid | 5.8 | No staining |
| | | No flocculation |
| Citric acid | 5.5 | No staining |
| | | No flocculation |
| Lactic acid | 6.3 | No staining |
| | | Brown flocculants |
| Ascorbic acid | 6.9 | Reduced staining |
| | | Brown flocculants |
| Ascorbic acid (400mg) | 5.2 | No staining |
| | | No flocculation |

When the experiments were conducted in a cooking container of aluminium, glass or ceramic material, comparable reduction of off colour was observed on the surface of the cooking container.

### Example 3

The experiment of Example 1 was repeated for different iron compounds. Off-colour on the surface of the cooking container and flocculation was analysed in the presence and absence of citric acid. Iron content has been indicated in grams per 8 gram of the Base mixture.

### Base mixture:

| | |
|---|---|
| NaCl | 54.5 %wt |
| Monosodium glutamate | 16.8 %wt |
| Hydrolysed vegetable protein maize powder light (4905, firma Rieber) | 15.7 %wt |
| White sugar | 6.3 %wt |
| Fractionated palm oil | 1.6 %wt |
| Potato starch, native, 8% moisture | 5.2 %wt |

| | 1 | 2 | 3 | 4 | 5 | 6 |
|---|---|---|---|---|---|---|
| Base | 8g | 8g | 8g | 8g | 8g | 8g |
| Fe-II sulphate dried | 0.05 g | 0.05 g | | | | |
| Fe-II fumarate | | | 0.05 g | 0.05 g | | |
| Fe-II gluconate | | | | | 0.146 g | 0.146 g |
| Citric acid anhydrid | | 0.100 g | | 0.100 g | | 0.100 g |

The mixture was mixed into 500 ml hot water, brought to the boil in a steel casserole and simmered for 2 minutes.

| | 1 | 2 | 3 | 4 | 5 | 6 |
|---|---|---|---|---|---|---|
| Off-color on surface cooking container | strong | none | strong | none | Few, punctual | None |
| flocculation | flocculation | none | flocculation | none | flocculation | none |

In the examples above, the total amount of ingredients in a formulation is intended to be 100%. Slight deviation may be due to rounding off. Modifications in the amounts due to different amounts of acid compound or iron compound were compensated for by the NaCl content.

## Claims

1. A dry savoury food concentrate comprising:
a) from 30 %wt. to 70 %wt. of NaCl;
b) from 0.05 %wt. to 2 %wt of an iron ion selected from the group consisting of Fe²⁺ and Fe³⁺ and mixtures thereof, which iron ion is derived from an added iron compound which is dissolvable in an aqueous solution,
c) from 0.35%wt. to 7.0%wt of an acid compound selected from the group consisting of citric acid, ascorbic acid, malic acid, tartaric acid, lactic acid and mixtures thereof,
all weight% based on the weight of the total dry savoury food concentrate,
and wherein the ratio of acid ions to iron ions on molecular level is between 1:1 and 10:1,
and wherein the concentrate is a concentrate selected from the group of concentrates consisting of a bouillon concentrate, a soup concentrate, a sauce concentrate and a gravy concentrate.

2. Dry savoury food concentrate according to claim 1, wherein the source of the iron ion comprises an iron compound selected from the group consisting of ferrous gluconate, ferrous sulphate, ferrous fumarate, ferric-Na-EDTA, ferric ammonium citrate and mixtures thereof.

3. Dry savoury food concentrate according to any one of the preceding claims, wherein the acid compound comprises citric acid.

4. Dry savoury food concentrate according to claim 2 or 3, wherein the iron compound is present in an amount of from 0.35%wt. to 7.0 %wt, based on the weight of the dry savoury food concentrate.

5. Dry savoury food concentrate according to any one of the preceding claims further comprising fat in an amount of from 1%wt.to 30%wt.

6. Dry savoury food concentrate according to any one of the preceding claims wherein the dry savoury food concentrate upon dissolving in hot or boiling water results in a ready-to-eat food product with a pH in the range of from 5.2 to 8.

7. A process to prepare a dry savoury food concentrate selected from the group of concentrates consisting of a bouillon concentrate, a soup concentrate, a sauce concentrate and a gravy concentrate, according to any one of the preceding claims, comprising the steps of:
a) preparing a mixture comprising:
• from 30%wt. to 70 %wt. of NaCl;
• from 0.05 %wt. to 2 %wt of an iron ion selected from the group consisting of Fe²⁺ and Fe³⁺ and mixtures thereof, which iron ion is derived from an added iron compound which is dissolvable in an aqueous solution,
• from 0.35%wt. to 7.0%wt of an acid compound selected from the group consisting of citric acid, ascorbic acid, malic acid, tartaric acid, lactic acid and mixtures thereof,
all weight% based on the weight of the total dry savoury food concentrate;
b) shaping the resulting mixture to individual dry savoury food concentrates;
c) optionally packaging the shaped dry savoury food concentrates.

8. A process to prepare a ready-to-eat food product by using at least one dry savoury food concentrate according to any one of claims 1 to 6, comprising the step of:
a) combining the at least one dry savoury food concentrate, at least partly, with an aqueous liquid or a food product,
wherein the aqueous liquid or the food product is contained in a cooking container.

9. Ready-to-eat food product comprising a dry savoury food concentrate of any one of claims 1 to 6 in an at least partly dissolved or comminuted status, wherein the ready-to-eat food product is a bouillon, a soup, a sauce, a gravy or a seasoned dish, and wherein the source of the iron ion comprises an iron compound selected from the group consisting of ferrous gluconate, ferrous sulphate, ferrous fumarate, ferric-Na-EDTA, ferric ammonium citrate and mixtures thereof.

10. Ready-to-eat food product according to claim 9, wherein the pH of the ready to eat food product is between 5.2 and 8.

11. Ready to eat food product according to claim 9 or 10, wherein the Na⁺ content is between 0.2%wt. and 0.7 wt%, based on the weight of the ready to eat food product.

12. A process to reduce formation of off-colour on the inner surface of a cooking container during preparation of an iron-fortified ready to eat food product, comprising the step of dissolving an iron-fortified dry savoury food concentrate in an aqueous liquid present in the cooking container, **characterised in that** the iron-fortified dry savoury food concentrate comprises an acid compound selected from the group consisting of citric acid, ascorbic acid, malic acid, tartaric acid, lactic acid and mixtures thereof.

## Patentansprüche

1. Trockenes wohlschmeckendes Nahrungsmittelkonzentrat,
das Folgendes aufweist:
a) 30 bis 70 Gew.-% NaCl;
b) 0,05 bis 2 Gew.-% eines Eisenions, das aus der Gruppe ausgewählt ist, die aus Fe²⁺ und Fe³⁺ und Gemischen davon besteht, wobei das Eisenion von einer zugesetzten Eisenverbindung abgeleitet ist, die in einer wässrigen Lösung löslich ist;
c) 0,35 bis 7,0 Gew.-% einer Säureverbindung, die aus der Gruppe ausgewählt ist, die aus Citronensäure, Ascorbinsäure, Äpfelsäure, Weinsäure, Milchsäure und Gemischen davon besteht;
wobei alle Gew.-% auf das Gewicht des gesamten trockenen wohlschmeckenden Nahrungsmittelkonzentrats bezogen sind, und
wobei das Molverhältnis zwischen Säureionen und Eisenionen 1:1 bis 10:1 beträgt, und
wobei das Konzentrat ein solches ist, das aus der Gruppe von Konzentraten ausgewählt ist, die aus einem Bouillonkonzentrat, Suppenkonzentrat, Soßenkonzentrat und Bratensoßenkonzentrat besteht.

2. Trockenes wohlschmeckendes Nahrungsmittelkonzentrat nach Anspruch 1, wobei die Eisenionenquelle eine Eisenverbindung aufweist, die aus der Gruppe ausgewählt ist, die aus Eisen(II)-gluconat, Eisen(II)-sulfat, Eisen(II)-fumarat, Eisen(III)-Na-EDTA, Eisen(III)-ammoniumcitrat und Gemischen davon besteht.

3. Trockenes wohlschmeckendes Nahrungsmittelkonzentrat nach einem der vorstehenden Ansprüche,
wobei die Säureverbindung Citronensäure aufweist.

4. Trockenes wohlschmeckendes Nahrungsmittelkonzentrat nach Anspruch 2 oder 3,
wobei die Eisenverbindung in einer Menge von 0,35 bis 7,0 Gew.-% vorliegt, und zwar auf das Gewicht des trockenen wohlschmeckenden Nahrungsmittelkonzentrats bezogen.

5. Trockenes wohlschmeckendes Nahrungsmittelkonzentrat nach einem der vorstehenden Ansprüche,
das ferner Fett in einer Menge von 1 bis 30 Gew.-% aufweist.

6. Trockenes wohlschmeckendes Nahrungsmittelkonzentrat nach einem der vorstehenden Ansprüche,
wobei das trockene wohlschmeckende Nahrungsmittelkonzentrat nach dem Auflösen im heißem oder kochendem Wasser ein verzehrfertiges Nahrungsmittelprodukt mit einem pH-Wert im Bereich von 5,2 bis 8 ergibt.

7. Verfahren zum Herstellen eines trockenen wohlschmeckenden Nahrungsmittelkonzentrats, das aus der Gruppe von Konzentraten ausgewählt ist, die aus einem Bouillonkonzentrat, Suppenkonzentrat, Soßenkonzentrat und Bratensoßenkonzentrat besteht, nach einem der vorstehenden Ansprüche,
das die folgenden Schritte aufweist:
a) Herstellen eines Gemischs, das Folgendes aufweist:
↑ 30 bis 70 Gew. % NaCl;
↑ 0,05 bis 2 Gew. % eines Eisenions, das aus der Gruppe ausgewählt ist, die aus Fe²⁺ und Fe³⁺ und Gemischen davon besteht, wobei das Eisenion von einer zugesetzten Eisenverbindung abgeleitet ist, die in einer wässrigen Lösung löslich ist;
↑ 0,35 bis 7,0 Gew. % einer Säureverbindung, die aus der Gruppe ausgewählt ist, die aus Citronensäure, Ascorbinsäure, Äpfelsäure, Weinsäure, Milchsäure und Gemischen davon besteht;
wobei alle Gew. % jeweils auf das Gewicht des gesamten trockenen wohlschmeckenden Nahrungsmittelkonzentrats bezogen sind;
b) Formen des entstandenen Gemischs zu einzelnen trockenen wohlschmeckenden Nahrungsmittelkonzentraten;
c) gegebenenfalls Verpacken der geformten trockenen wohlschmeckenden Nahrungsmittelkonzentrate.

8. Verfahren zum Herstellen eines verzehrfertigen Nahrungsmittelproduktes unter Verwendung von zumindest einem trockenen wohlschmeckenden Nahrungsmittelkonzentrat nach einem der Ansprüche 1 bis 6,
das den folgenden Schritt aufweist:
a) Kombinieren des zumindest einen trockenen wohlschmeckenden Nahrungsmittelkonzentrats zumindest teilweise mit einer wässrigen Flüssigkeit oder einem Nahrungsmittelprodukt,
wobei die wässrige Flüssigkeit oder das Nahrungsmittelprodukt in einem Kochgefäß enthalten ist.

9. Verzehrfertiges Nahrungsmittelprodukt, das ein trockenes wohlschmeckendes Nahrungsmittelkonzentrat nach einem der Ansprüche 1 bis 6 in einem zumindest teilweise gelösten oder zerkleinerten Zustand aufweist, wobei das verzehrfertige Nahrungsmittelprodukt eine Bouillon, Suppe, Soße, Bratensoße oder ein gewürztes Gericht ist, und wobei die Eisenionenquelle eine Eisenverbindung aufweist, die aus der Gruppe ausgewählt ist, die aus Eisen(II)-gluconat, Eisen(II)-sulfat, Eisen(II)-fumarat, Eisen(III)-Na-EDTA, Eisen(III)-ammoniumcitrat und Gemischen davon besteht.

10. Verzehrfertiges Nahrungsmittelprodukt nach Anspruch 9,
wobei der pH-Wert des verzehrfertigen Nahrungsmittelproduktes 5,2 bis 8 beträgt.

11. Verzehrfertiges Nahrungsmittelprodukt nach Anspruch 9 oder 10,
wobei der Na⁺-Gehalt 0,2 bis 0,7 Gew.-% beträgt, und zwar auf das Gewicht des verzehrfertigen Nahrungsmittelproduktes bezogen.

12. Verfahren zur Verminderung der Entstehung einer blassen Farbe auf der Innenseite eines Kochgefäßes bei der Herstellung eines mit Eisen verstärkten verzehrfertigen Nahrungsmittelproduktes,
das den Schritt des Lösens eines mit Eisen verstärkten trockenen wohlschmeckenden Nahrungsmittelkonzentrats in einer wässrigen Flüssigkeit aufweist, die in einem Kochgefäß vorliegt,
**dadurch gekennzeichnet, dass** das mit Eisen verstärkte trockene wohlschmeckende Nahrungsmittelkonzentrat eine Säureverbindung aufweist, die aus der Gruppe ausgewählt ist, die aus Citronensäure, Ascorbinsäure, Äpfelsäure, Weinsäure, Milchsäure und Gemischen davon besteht.

## Revendications

1. Concentré alimentaire goûteux sec comprenant :
a) de 30 % en poids à 70 % en poids de NaCl ;
b) de 0,05 % en poids à 2 % en poids d'un ion fer choisi dans le groupe constitué de Fe²⁺ et Fe³⁺ et de mélanges de ceux-ci, lequel ion fer est dérivé d'un composé de fer ajouté qui peut être dissous dans une solution aqueuse,
c) de 0,35 % en poids à 7,0 % en poids d'un composé d'acide choisi dans le groupe constitué d'acide citrique, d'acide ascorbique, d'acide malique, d'acide tartarique, d'acide lactique et de mélanges de ceux-ci,
tous les % en poids rapportés au poids du concentré alimentaire goûteux sec total,
et dans lequel le rapport des ions acides aux ions fer sur un niveau moléculaire est de 1:1 à 10:1,
et dans lequel le concentré est un concentré choisi dans le groupe des concentrés consistant en un concentré de bouillon, un concentré de soupe, un concentré de sauce et un concentré de jus.

2. Concentré alimentaire goûteux sec selon la revendication 1, dans lequel la source de l'ion fer comprend un composé de fer choisi dans le groupe constitué de gluconate ferreux, de sulfate ferreux, de fumarate ferreux, de Na-EDTA ferrique, de citrate d'ammonium ferrique et de mélanges de ceux-ci.

3. Concentré alimentaire goûteux sec selon l'une quelconque des revendications précédentes, dans lequel le composé d'acide comprend de l'acide citrique.

4. Concentré alimentaire goûteux sec selon la revendication 2 ou 3, dans lequel le composé de fer est présent dans une quantité de 0,35 % en poids à 7,0 % en poids rapporté au poids du concentré alimentaire goûteux sec.

5. Concentré alimentaire goûteux sec selon l'une quelconque des revendications précédentes comprenant de plus de la graisse dans une quantité de 1 % en poids à 30 % en poids.

6. Concentré alimentaire goûteux sec selon l'une quelconque des revendications précédentes, dans lequel le concentré alimentaire goûteux sec lors de la dissolution dans de l'eau chaude ou bouillante résulte en un produit alimentaire prêt à être consommé avec un pH dans l'intervalle de 5,2 à 8.

7. Procédé de préparation d'un concentré alimentaire goûteux sec choisi dans le groupe des concentrés consistant en un concentré de bouillon, un concentré de soupe, un concentré de sauce et un concentré de jus, selon l'une quelconque des revendications précédentes, comprenant les étapes :
a) de préparation d'un mélange comprenant :
▪ de 30 % en poids à 70 % en poids de NaCl ;
▪ de 0,05 % en poids à 2 % en poids d'un ion fer choisi dans le groupe constitué de Fe²⁺ et de Fe³⁺ et de mélanges de ceux-ci, lequel ion fer est dérivé d'un composé de fer ajouté qui peut être dissous dans une solution aqueuse,
▪ de 0,35 % en poids à 7,0 % en poids d'un composé d'acide choisi dans le groupe constitué d'acide citrique, d'acide ascorbique, d'acide malique, d'acide tartarique, d'acide lactique et de mélanges de ceux-ci,
tous les % en poids étant rapportés au poids du concentré alimentaire goûteux sec total ;
b) de façonnage du mélange résultant en des concentrés alimentaires goûteux secs individuels ;
c) d'emballage éventuel des concentrés alimentaires goûteux secs façonnés.

8. Procédé de préparation d'un produit alimentaire prêt à être consommé en utilisant au moins un concentré alimentaire goûteux sec selon l'une quelconque des revendications 1 à 6, comprenant l'étape :
a) de combinaison du au moins un concentré alimentaire goûteux sec, au moins partiellement, avec un liquide aqueux ou un produit alimentaire,
dans lequel le liquide aqueux ou le produit alimentaire est contenu dans un récipient de cuisson.

9. Produit alimentaire prêt à être consommé comprenant un concentré alimentaire goûteux sec selon l'une quelconque des revendications 1 à 6 dans un état au moins partiellement dissous ou réduit en poudre, dans lequel le produit alimentaire prêt à être consommé est un bouillon, une soupe, une sauce, un jus ou un plat assaisonné, et dans lequel la source de l'ion fer comprend un composé de fer choisi dans le groupe constitué de gluconate ferreux, de sulfate ferreux, de fumarate ferreux, de Na-EDTA ferrique, de citrate d'ammonium ferrique et de mélanges de ceux-ci.

10. Produit alimentaire prêt à être consommé selon la revendication 9, dans lequel le pH du produit alimentaire prêt à être consommé est de 5,2 à 8.

11. Produit alimentaire prêt à être consommé selon la revendication 9 ou 10, dans lequel la teneur en Na⁺ est de 0,2 % en poids à 0,7 % en poids, rapporté au poids du produit alimentaire prêt à être consommé.

12. Procédé de réduction de mauvaise couleur sur la surface interne d'un récipient de cuisson pendant la préparation d'un produit alimentaire prêt à être consommé fortifié en fer, comprenant l'étape de dissolution d'un concentré alimentaire goûteux sec fortifié en fer dans un liquide aqueux présent dans le récipient de cuisson, **caractérisé en ce que** le concentré alimentaire goûteux sec fortifié comprend un composé d'acide choisi dans le groupe constitué d'acide citrique, d'acide ascorbique, d'acide malique, d'acide tartarique, d'acide lactique et de mélanges de ceux-ci.
